# EUROPEAN PATENT APPLICATION

(11) **EP 4 395 039 A2**
(43) Date of publication of application: **03.07.2024**
(21) Application number: 23211954.5
(22) Date of filing: 24.11.2023
(51) Int. Cl.: H01M 50/383, H01M 50/204, H01M 50/342

(54) **BATTERY MODULE WITH A FIRE-EXTINGUISHING SHEET**

(30) Priority: 28.12.2022 KR 20220187202
(71) Applicant: Samsung SDI Co., Ltd., Yongin-si, Gyeonggi-do 17084 (KR)
(72) Inventor: KIM, Beom Joo, 17084 Yongin-si (KR); LEE, Sang Gu, 17084 Yongin-si (KR); LEE, Joo Yul, 17084 Yongin-si (KR); LEE, Jeong Min, 17084 Yongin-si (KR)
(74) Representative: Marks & Clerk LLP

(57) **Abstract**

A battery module includes: a housing; a plurality of battery cells inside the housing, each of the battery cells having a vent; and a fire-extinguishing sheet inside the housing and covering the vents of the battery cells. The fire-extinguishing sheet includes: a main body portion including a metal and accommodating a fire-extinguishing agent therein; and an insulating film covering first and second surfaces of the main body portion.

## Description

### BACKGROUND

### 1. Field

Aspects of embodiments of the present disclosure relate to a battery module.

### 2. Description of the Related Art

A secondary (or rechargeable) battery is a power storage system (or device) that provides excellent energy density by converting electrical energy into chemical energy and storing the same. Compared to non-rechargeable primary batteries, secondary batteries are rechargeable and are widely used in IT devices, such as smart phones, cellular phones, notebooks, and tablet PCs. Recently, interest in electric vehicles has increased to reduce environmental pollution, and accordingly, high-capacity secondary batteries are being adopted for use in electric vehicles. These secondary batteries desirably have characteristics such as high density, high power, and stability.

Generally, rechargeable batteries include an electrode assembly including a positive electrode, a negative electrode, and a separator interposed between the positive and negative electrodes, a case receiving (or accommodating) the electrode assembly, and an electrode terminal electrically connected to the electrode assembly. An electrolyte solution is injected into the case to enable charging and discharging of the battery via an electrochemical reaction of the positive electrode, the negative electrode, and the electrolyte solution. The shape of the case, such as cylindrical or rectangular, may be selected based on the battery's intended purpose.

Rechargeable batteries may be used as a battery module formed of a plurality of unit battery cells coupled together in series and/or in parallel to provide a high energy content, such as for motor driving of a hybrid vehicle. The battery module may be formed by interconnecting the electrode terminals of the plurality of unit battery cells in a manner depending on a desired amount of power and to realize a high-power rechargeable battery.

The battery module may be implemented in a block or modular manner. In the block-type implementation, each battery cell is coupled to a common current collector structure and a common battery management system. In the modular implementation, a plurality of battery cells are connected together to form a submodule, and a plurality of sub-modules are connected together to form a battery module. The battery management function can be implemented at a module or submodule level, thereby improving component compatibility. To construct a battery system, one or more battery modules are mechanically and electrically integrated, integrated with thermal management systems, and set up for communication with one or more electrical consumers.

Mechanical integration of battery modules may be implemented by providing a carrier plate and individually positioning battery cells or sub-modules thereon. Fixing of the battery cells or sub-modules to the carrier plate may be achieved by recessed parts installed in the carrier plate or by mechanical interconnects, such as bolts or screws. In some cases, the battery cells or sub-modules may be limited to those for fastening a side plate to a side of the carrier plate. Moreover, the carrier plate and/or a cover plate that can be fixed to the sides of the battery cells may be provided to constitute a multi-level battery module. The carrier plate and/or the side plate may include refrigerant ducts to cool the battery cells or battery modules.

A thermal management system provides thermal control of the battery pack to safely use the battery module by efficiently emitting, discharging, and/or dissipating heat generated by its rechargeable batteries. If the heat emission/discharge/dissipation is not sufficiently performed, temperature deviations may occur between respective battery cells such that the battery module may no longer generate a desired amount of power. In addition, an increase of the internal temperature can lead to abnormal reactions occurring therein and, thus, charging and discharging performance of the rechargeable deteriorates and the life-span of the rechargeable battery is shortened.

Thermal runaway is an example of an abnormal operating condition of a battery cell that can occur when a secondary battery is overheated or overcharged. The critical temperature leading to thermal runaway is approximately 150 °C or higher, and the critical temperature can be reached or exceeded due to localized damage, such as an internal short circuit of a cell, or heating from an adjacent battery cell due to poor electrical contact or short circuit. Thermal runaway is a self-accelerating chemical process inside a battery cell. The thermal runaway generates large amounts of heat and gases until all available materials in the battery cell are consumed, during which defective battery cells may heat up to a cell temperature of 700 °C or higher and may release large amounts of hot gases into the system. A battery cell generally includes a vent opening that allows vent-gas jets to be released when a certain overpressure inside the battery is reached or exceeded. The released vent-gas jets typically have a temperature of about 500 °C and a gas velocity of about 300 m/s in the case of a battery cell having a relatively high energy density (e.g., an energy density of about 200 wh/kg).

During thermal runaway, large amounts of heat can be transferred to neighboring cells by vent-gases. These neighboring battery cells are prone to thermal runaway because they are already heated by the adjacent failed cell due to heat conduction through the side plate, base plate, and/or electrical connectors thereof. The result can be thermal runaway propagation across the entire battery system and cell fire and/or total loss of an electric vehicle.

A related art battery system may include a fire extinguishing system that is started when a cell temperature exceeds a certain critical value. A safety component may respond to temperature, such as a melting fuse member, by decomposing at a temperature critical value or higher. The safety component is generally arranged close to or immediately adjacent to the battery cells; thus, there is a high risk of false start-up of a fire extinguishing system. Most fire extinguishing systems operate irreversibly and often initiate fluid extinguishing. A false start-up may result in irreversible damage to an operating battery system and/or the need to replace the safety component. Related art fire extinguishing systems may require significant additional installation space and may reduce energy efficiency by adding a lot of extra weight to battery systems.

The above information disclosed in this Background section is for enhancement of understanding of the background of the present disclosure, and therefore, it may contain information that does not constitute prior art.

### SUMMARY

Embodiments of the present disclosure provide a battery module that can prevent flames emitted from battery cells in a thermal runaway state from being discharged to the outside by using a fire-extinguishing sheet to extinguish a fire. Embodiments of the present disclosure also provide a battery module exhibiting improved safety by easily discharging gas to the outside to reduce or prevent heat propagation.

A battery module, according to an embodiment of the present disclosure, includes: a housing; a plurality of battery cells inside the housing, each having a vent; and a fire-extinguishing sheet inside the housing and covering the vents of the battery cells. The fire-extinguishing sheet includes a main body portion including a metal and accommodating a fire-extinguishing agent therein and an insulating film covering first and second surfaces of the main body portion.

The main body portion may be a metal plate extending in one direction and may have a plurality of pores extending between the first and second surfaces.

The fire-extinguishing agent may be impregnated into the pores of the main body portion.

The mass of the fire-extinguishing agent may be in a range of 35 g/m³ to 100 g/m³ based on a volume of the battery cells.

The main body portion may have a thickness in a range of 0.1 mm to 5 mm.

The porosity of the main body portion may be in a range of 50% to 95%.

The main body portion may be a mesh having an accommodation space for accommodating the fire-extinguishing agent therein. The accommodation space may extend in one direction and may surround the fire-extinguishing agent.

The insulating film may be attached to an outer surface of the main body portion to accommodate the fire-extinguishing agent in the accommodation space of the main body portion.

The battery module may further include a cover covering the fire-extinguishing agent in the main body portion. A total thickness between the first and second surfaces of the main body portion may be in a range of 0.3 mm to 5 mm, and a thickness of the cover may be in a range of 0.1 mm to 1 mm.

The main body portion may be made of steel, nickel, aluminium, magnesium, or copper.

The insulating film may include one or more of polyethylene terephthalate (PET), polycarbonate (PC), and polypropylene (PP).

The insulating film may be made of a plastic material having a melting point of 300 °C or less.

### BRIEF DESCRIPTION OF DRAWINGS

FIG. 1 is a schematic cross-sectional view of a battery module according to the present disclosure.
FIGS. 2A and 2B are planar schematic views showing the battery module shown in FIG. 1, viewed from above, before a fire-extinguishing sheet is installed.
FIGS. 3A and 3B are cross-sectional views showing a fire-extinguishing sheet of the battery module shown in FIG. 1 according to an embodiment.
FIGS. 4A and 4B are cross-sectional views showing a fire-extinguishing sheet of the battery module shown in FIG. 1 according to another embodiment.

### DETAILED DESCRIPTION

Hereinafter, embodiments of the present disclosure will be described, in detail, with reference to the accompanying drawings.

Embodiment of the present disclosure are described herein to more completely explain aspects and features of the present disclosure to those skilled in the art. The present disclosure may, however, be embodied in many different forms and should not be construed as being limited to the embodiments described herein. Rather, embodiments are provided so that this disclosure will be thorough and complete and will convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

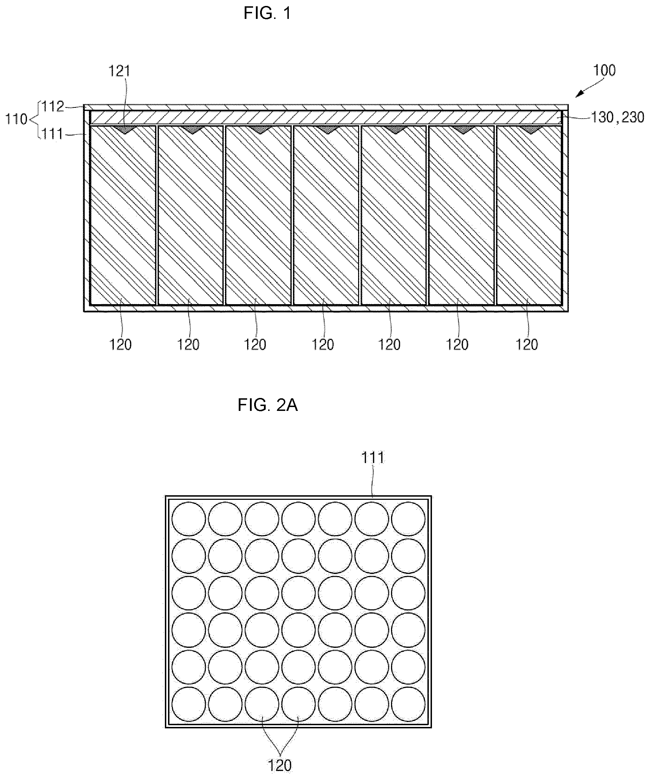

Referring to FIG. 1, a schematic cross-sectional view of a battery module according to an embodiment of the present disclosure is shown. As shown in FIG. 1, the battery module 100 according to an embodiment of the present disclosure includes a housing 110, a plurality of battery cells 120 accommodated in an inner space of the housing 110 and arranged in (e.g., stacked in) at least one direction, and a fire-extinguishing sheet 130 disposed to cover one surface of the plurality of battery cells 120 and accommodated in the housing 110.

The housing 110 provides a space for accommodating the plurality of battery cells 120 and the fire-extinguishing sheet 130 therein. The housing 110 may include a housing body 111 and a housing cover 112 that seals a top opening of the housing body 111. The housing body 111 includes a lower plate, a side plate extending upwardly from one side of the lower plate and the other side opposite to the one side, and two end plates for connecting between (or extending between) the side plates. The housing 110 may fix positions of the plurality of battery cells 120 and the fire-extinguishing sheet 130 and may protect the plurality of battery cells 120 and the fire-extinguishing sheet 130 from the external environment.

In addition, the housing body 111 may include a holder or a rib therein to fix the plurality of battery cells 120. Additionally, although FIG. 1 shows an embodiment in which seven battery cells 120 are arranged in (or installed in) the housing body 111, the number of battery cells 120 may be varied and may be two or more.

Each of the battery cells 120 includes an electrode assembly accommodated inside the case, and the electrode assemblies may be wound or stacked, for example, in a state in which a separator is placed between a positive electrode plate and a negative electrode plate, each of the positive and negative electrode plates being coated with an active material. In addition, a vent 121 is formed in one area of the battery cell 120. The vent 121 may be an area of the case having a relatively small thickness compared to other areas of the case. The vents 121 of the plurality of battery cells 120 may be disposed on the same surface in the plurality of battery cells 120 (e.g., the battery cells 120 may be arranged in the same orientation). In addition, one surface of the plurality of battery cells 120 at where the vents 121 are located may be covered with a fire-extinguishing sheet 130. Hereinafter, the one surface of the plurality of battery cells 120 where the vents 121 are located will be referred to as an upper surface, for convenience of description. The one surface of the plurality of battery cells 120 where the vents 121 are located may be variously changed to a lower surface or a side surface according to the direction in which the plurality of battery cells 120 are arranged in the battery module 100.

In addition, each battery cell 120 includes electrode terminals electrically connected to areas of the positive and negative electrode plates without an active material coated thereon (e.g., uncoated portions of the positive and negative electrode plates) and may be exposed to the outside of the case. The electrode terminals may be referred to as a positive electrode terminal and a negative electrode terminal, respectively. In some embodiments, the case may act as a positive electrode terminal or a negative electrode terminal.

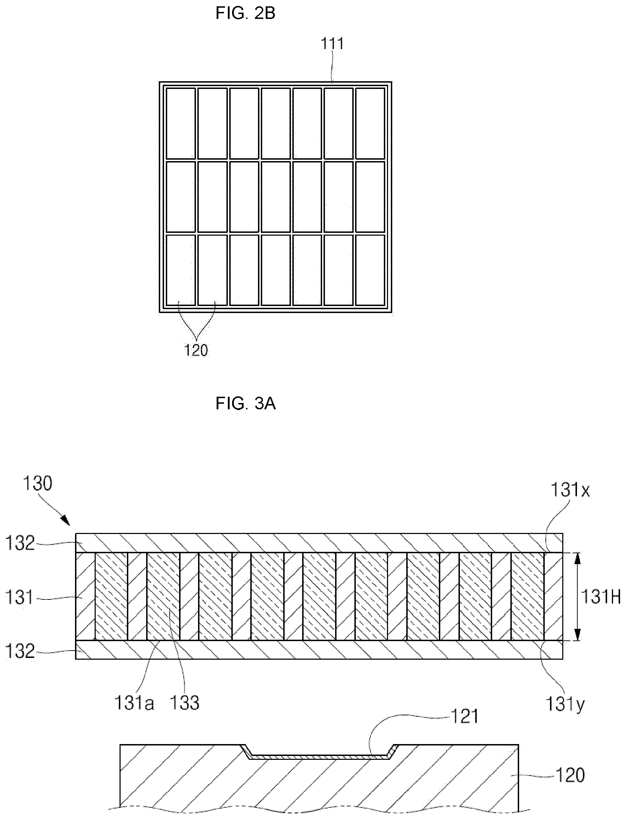

The battery cell 120 may be a cylindrical cell, as shown in FIG. 2A, or may be a prismatic cell, as shown in FIG. 2B. The form (e.g., the shape) of the battery cell 120 is not limited. However, the respective battery cells 120 may be installed in columns and/or rows in the housing 110. In addition, the plurality of battery cells 120 may be installed in at least one column and/or one row in the housing 110, but the number of columns and/or rows is not limited.

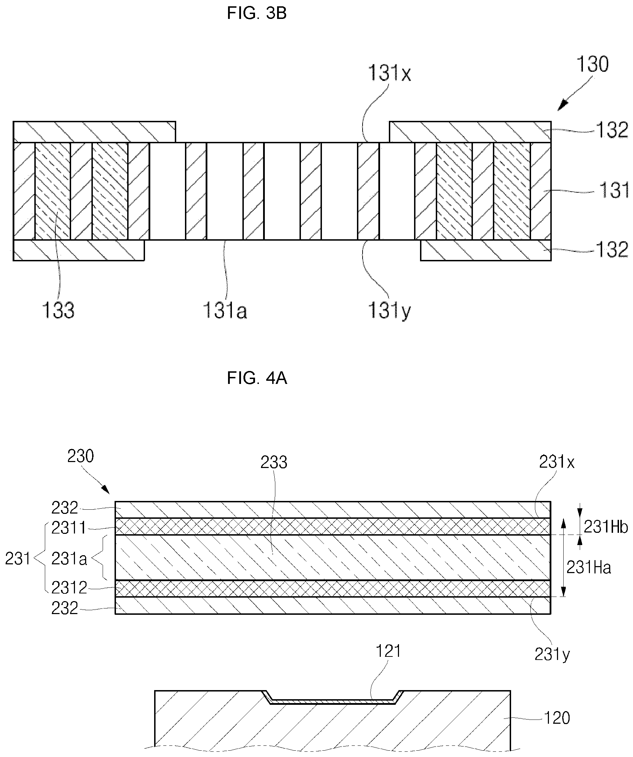

The fire-extinguishing sheet 130 includes a fire-extinguishing agent 133. The fire-extinguishing sheet 130 may extend in one direction to correspond to the upper surface of the plurality of battery cells 120 and may be positioned above the plurality of battery cells 120 (e.g., above the vents 121 of the plurality of battery cells 120). The fire-extinguishing sheet 130 may be positioned above the battery cells 120 to cover all of the vents 121 of the plurality of battery cells 120. In some embodiments, the fire-extinguishing sheet 130 may be positioned inside the housing 110. Referring to FIG. 3A, a schematic cross-sectional view of the fire-extinguishing sheet 130 and a top portion of a battery cell 120 is shown, and referring to FIG. 3B, a schematic cross-sectional view showing the fire-extinguishing sheet 130 after the fire-extinguishing agent is sprayed is shown. Hereinafter, the configuration and operation of the fire-extinguishing sheet 130 will be described with reference to FIGS. 3A and 3B.

First, the fire-extinguishing sheet 130 may include a plate-shaped main body portion 131 extending substantially in one direction and an insulating film 132 bonded to cover a first surface (e.g., an upper surface) 131x of the main body portion 131 and a second surface (e.g., a lower surface) 131y of the main body portion 131 opposite to the first surface 131x. In one embodiment, the main body portion 131 may be a rectangular plate, but the shape thereof is not limited thereto. The main body portion 131 may be a porous plate having a plurality of pores 131a. The fire-extinguishing agent 133 may be impregnated into the plurality of pores 131a in the main body portion 131. In some embodiments, the porosity of the main body portion 131 may be in a range of about 50% to about 95% or in a range of about 65% to about 80% relative to the entire main body portion 131. Here, if the porosity of the main body portion 131 is less than about 50%, the fire-extinguishing sheet 130 may not reliably suppress flames generated during thermal runaway of the battery cell 120 due to a reduction in the proportion of the fire-extinguishing agent 133 that may be impregnated into the main body portion 131. In addition, if the porosity of the main body portion 131 is greater than about 95%, the fire-extinguishing sheet 130 may not be sufficiently rigid.

In the main body portion 131, the plurality of pores 131a may penetrate between (or may extend between) the first surface 131x and the second surface 131y. In addition, the fire-extinguishing agent 133 included in the plurality of pores 131a in the main body portion 131 may be fixed within the main body portion 131 by the insulating film 132 bonded to the first and second surfaces 131x and 131y of the main body portion 131.

The main body portion 131 may be a plate made of a metal material having a plurality of pores 131a. The main body portion 131 may be made of, for example, steel, nickel, aluminium, magnesium, copper, or an equivalent metal thereof having little thermal deformation. A thickness 131H of the main body portion 131 may be 0.1 mm to 5 mm. More preferably, the thickness 131H of the main body portion 131 may be in a range of about 0.2 mm to about 3 mm. If the thickness 131H of the main body portion 131 is less than about 0.1 mm, the fire-extinguishing sheet 130 may not reliably extinguish flames generated during thermal runaway of battery cell due to the lack of fire-extinguishing agent. In addition, if the thickness 131H of the main body portion 131 is greater than about 5 mm, the overall size of the battery module 10 may be increased due to an increase in the thickness of the fire-extinguishing sheet 130 and the amount of the fire-extinguishing agent 133 may be unnecessarily increased. The thickness of the main body portion 131 may be varied according to the capacity of the battery cells 120.

In addition, the mass of the fire-extinguishing agent 133 included in the main body portion 131 may be in a range of about 35 g/m³ to about 100 g/m³ relative to the volume of the battery cells 120. In one embodiment, the mass of the fire-extinguishing agent 133 included in the main body portion 131 may be in a range of about 50 g/m³ to about 100 g/m³. If the mass of the fire-extinguishing agent 133 is less than about 35 g/m³, the fire-extinguishing sheet 130 may not reliably extinguish flames generated during thermal runaway of the battery cell due to insufficient fire-extinguishing agent.

As such, when the battery cell 120 is in a thermal runaway state, the main body portion 131 made of a metal material may act as a flame arrester to reduce the temperature of the flames and prevent discharge of the flames.

The insulating film 132 may be attached to the first surface 131x and the second surface 131y of the main body portion 131, respectively. The insulating film 132 may include one or more of polyethylene terephthalate (PET), polycarbonate (PC), and polypropylene (PP) or may be made of a plastic material having a melting point of about 300 °C or less. When the battery cell 120 is in a thermal runaway state, the insulating film 132 may be melted by flame or heat discharged through the vent 121. As used herein, thermal runaway state means a state in which the battery cell 120 discharges heat (or flames) and gas generated inside the battery cell 120 when the cell temperature inside the battery cell 120 is in a high-temperature and/or high-pressure state due to overheating, overcharging, short circuit, or poor electrical contact.

The fire-extinguishing agent 133 may include a mixture of two or more materials including at least one of alkali, acid, a carbon compound, a carbonic acid compound, a nitrogen compound, water, and a surfactant. For example, a fire-extinguishing agent including potassium hydrogen carbonate as a main component, a fire-extinguishing agent including sodium hydrogen carbonate as a main component, a fire-extinguishing agent including a reaction product of potassium hydrogen carbonate and urea as a main component, or a fire-extinguishing agent including ammonium dihydrogen phosphate may be used. However, the kind (or composition) of the fire-extinguishing agent is not limited thereto. The fire-extinguishing agent may be any one of solid, liquid, and gas.

Here, if the battery cell 120 is in a thermal runaway state, the vent 121 of the battery cell 120 may be ruptured due to high internal pressure, and the heat and gas generated inside the battery cell 120 may be discharged through the vent 121. In this case, the insulating film 132 provided on the upper and lower surfaces of the fire-extinguishing sheet 130 may be melted by the heat discharged through the vent 121 of the battery cell 120 in a thermal runaway state. In addition, when the insulating film 132 of the fire-extinguishing sheet 130 melts, the pores 131a in the main body portion 131 of the fire-extinguishing sheet 130 open through upper and lower portions, and thus, the fire-extinguishing agent 133 may be discharged into the battery cell 120. Thus, flames from the battery cell 120 in the thermal runaway state may be suppressed and extinguished by the fire-extinguishing agent 133 emitted from the fire-extinguishing sheet 130.

In addition, the fire-extinguishing sheet 130 may prevent heat from the battery cell 120 being in the thermal runaway state from being transferred to an adjacent battery cell 120 by the main body portion 131. In addition, the gas discharged from the battery cell 120 being in the thermal runaway state may be easily discharged through the pores 131a provided in the main body portion 131 of the fire-extinguishing sheet 130. In some embodiments, the housing 110 may further include a duct that allows the gas discharged through the fire-extinguishing sheet 130 to be easily moved and discharged to the outside. For example, the gas emitted by the battery cell 120 in the thermal runaway state, which has passed through the fire-extinguishing sheet 130, may be moved through the duct provided inside the housing 110 and discharged to the outside of the housing 110. In addition, flames discharged from the battery cell 120 in the thermal runaway state may be blocked from being discharged to the outside by the main body portion 131 of the fire-extinguishing sheet 130.

In the fire-extinguishing sheet 130, the insulating film 132 in the area corresponding to the battery cell 120 in the thermal runaway state is melted, and thus, the fire-extinguishing agent 133 drops only on the battery cell 120 in the thermal runaway state, thereby extinguishing (or preventing) a fire by suppressing the flames of the battery cell 120 and preventing heat propagation to neighboring battery cells 120. In addition, the fire-extinguishing sheet 130 may discharge the gas emitted from the battery cell 120 to the outside and may improve safety by blocking flames from being discharged to the outside by the main body portion 131 made of a metal.

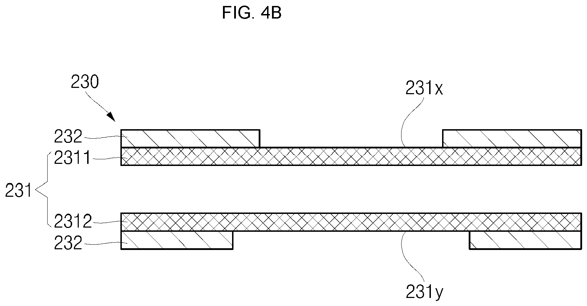

Referring to FIG. 4A, a schematic cross-sectional view of a fire-extinguishing sheet 230 applicable to the battery module 100 according to another embodiment is shown along with a top portion of a battery cell 120, and referring to FIG. 4B, a schematic cross-sectional view of the fire-extinguishing sheet 230 shown in FIG. 4A after the fire-extinguishing agent is sprayed is shown. Hereinafter, the configuration and operation of the fire-extinguishing sheet 230 will be described with reference to FIGS. 4A and 4B.

First, the fire-extinguishing sheet 230 may include a main body portion 231 in the form of a mesh in which a fire-extinguishing agent 233 is accommodated and an insulating film 232 bonded to an outside surface of the main body portion 231.

The main body portion 231 of the fire-extinguishing sheet 230 may have an accommodation space 231a for accommodating the fire-extinguishing agent 233 therein. For example, the main body portion 231 may be shaped to surround the fire-extinguishing agent 233 having a certain thickness and may cover all of the upper, lower, and side portions of the fire-extinguishing agent 233. That is, the main body portion 231 may be a metal mesh and may cover the fire-extinguishing agent 233 accommodated in the accommodation space 231a. In addition, the main body portion 231 may extend in one direction and may have a plate shape. In addition, the fire-extinguishing agent 233 accommodated in the accommodation space 231a may also extend in the same manner as the direction in which the main body portion 231 extends.

The main body portion 231 may be a metal mesh and may have a plurality of pores. The main body portion 231 may be made of, for example, steel, nickel, aluminium, magnesium, copper, or an equivalent metal thereof having little thermal deformation.

In addition, the main body portion 231 may have an upper main body portion 2311, a lower main body portion 2312, and a side main body portion. The accommodation space 231a may be located between the lower surface of the upper main body portion 2311 and the upper surface of the lower main body portion 2312. The fire-extinguishing agent 233 can be accommodated in the accommodation space 231a by the insulating film 232 adhered to the upper surface 231x of the upper main body portion 2311 and the lower surface 231y of the lower main body portion 2312 The insulating film 232 may be formed to surround the entire main body portion 231 surrounding the accommodation space 231a. For example, the insulating film 232 may be attached to cover not only the upper surface 231x of the upper main body portion 2311 and lower surface 231y of the lower main body portion 2312. Additionally, the insulating film 232 may also be attached to the side body portion covering the side surfaces of the accommodation space 231a. The insulating film 232 may prevent the fire-extinguishing agent 233 accommodated inside the accommodation space 231afrom being exposed and discharged to the outside. If the battery cell 120 is in a thermal runaway state, the main body portion 231 may block heat (and/or flames) discharged from the battery cell 120 from being discharged to the outside through the fire-extinguishing sheet 230.

A total thickness 231Ha between the upper surface 231x of the upper main body portion 2311 and the lower surface 231y of the lower main body portion 2312 may be in a range from about 0.3 mm to about 5 mm. In addition, a cover thickness 231Hb which is the thickness of the upper main body portion 2311 and the thickness of the lower main body portion 2312 that covering the fire-extinguishing agent 233 may be in a range from about 0.1 mm to about 1 mm. If the cover thickness 231Hb is less than about 0.1 mm, the main body portion 231 may not maintain its shape and may not reliably block flames discharged during thermal runaway of the battery cell 120. In addition, if the cover thickness 231Hb of the main body portion 231 is greater than about 1 mm, an unnecessarily increase in the overall thickness of the fire-extinguishing sheet 230 may result. In addition, the mass of the fire-extinguishing agent 233 included in the fire-extinguishing sheet 230may be in a range of about 35 g/m³ to about 100 g/m³ relative to the volume of the battery cells 120, which may be the same as that of the fire-extinguishing sheet 130, described above.

The insulating film 232 may be bonded to the upper surface 231x of the upper main body portion 2311 and the lower surface 231y of the lower main body portion 231, respectively. The insulating film 232 and the fire-extinguishing agent 233 may be similar to the insulating film 132 and the fire-extinguishing agent 233, previously described with respect to and shown in FIGS. 3A and 3B.

If the battery cell 120 is in a thermal runaway state, the vent 121 of the battery cell 120 may be ruptured due to high internal pressure, and the heat and gas generated inside the battery cell 120 may be discharged through the vent 121. In this case, the insulating film 232 provided on the upper and lower surfaces of the fire-extinguishing sheet 230 may be melted by the heat discharged through the vent 121 of the battery cell 120 in the thermal runaway state. In addition, when the insulating film 232 of the fire-extinguishing sheet 230 is melted, the fire-extinguishing agent 233 accommodated in the accommodation space 231a may be discharged downwardly through the mesh-type pores in the lower main body portion 2312. The fire-extinguishing agent 233 of the fire-extinguishing sheet 230 can suppress flames from the battery cell 120 in the thermal runaway state such that a fire can be extinguished (or prevented). Further, the fire-extinguishing sheet 230 may prevent heat from the battery cell 120 in a thermal runaway state from being transferred to an adjacent battery cell 120. In addition, the gas discharged from the battery cell 120 in the thermal runaway state may be easily discharged through the mesh-type main body portion 231 of the fire-extinguishing sheet 230. The housing 110 may further include a duct that allows the gas discharged through the fire-extinguishing sheet 230 to be easily moved and discharged to the outside. For example, the gas emitted by the battery cell 120 in the thermal runaway state is discharged through the fire-extinguishing sheet 230 and may be moved through the duct provided inside the housing 110 to the outside of the housing 110. In addition, flames discharged from the battery cell 120 in the thermal runaway state may be blocked from being discharged to the outside by the main body portion 231 of the fire-extinguishing sheet 230.

As described above, the battery module according to embodiments of the present disclosure can prevent flames of battery cells in a thermal runaway state from being discharged to the outside by a fire-extinguishing sheet and may extinguish a fire, thereby improving safety by easily discharging gas to the outside and preventing heat propagation.

The foregoing embodiments are only some embodiments for carrying out the battery module according to the present disclosure, which is not limited to the described embodiments. It will be understood by a person skilled in the art that various changes in form and details may be made therein without departing from the scope of the present disclosure as defined by the following claims and their equivalents.

## Claims

1. A battery module comprising:
a housing;
a plurality of battery cells inside the housing, each of the battery cells having a vent; and
a fire-extinguishing sheet inside the housing and covering the vents of the battery cells, the fire-extinguishing sheet comprising:
a main body portion comprising a metal and accommodating a fire-extinguishing agent therein; and
an insulating film covering first and second surfaces of the main body portion.

2. The battery module as claimed in claim 1, wherein the main body portion is a metal plate extending in one direction and has a plurality of pores extending between the first and second surfaces.

3. The battery module as claimed in claim 2, wherein the fire-extinguishing agent is impregnated into the pores of the main body portion.

4. The battery module as claimed in claim 3, wherein a mass of the fire-extinguishing agent is in a range of 35 g/m³ to 100 g/m³ based on a volume of the battery cells.

5. The battery module as claimed in any one of claims 2 to 4, wherein the main body portion has a thickness in a range of 0.1 mm to 5 mm.

6. The battery module as claimed in any one of claims 2 to 5, wherein the porosity of the main body portion is in a range of 50% to 95%.

7. The battery module as claimed in claim 1, wherein the main body portion comprising an upper main body portion and a lower main body portion each having a mesh shape, and
wherein the accommodation space accommodating the fire-extinguishing agent extends in one direction between the upper main body portion and the lower main body portion.

8. The battery module as claimed in claim 7, wherein the insulating film is attached to an upper surface of the upper main body portion and a lower surface of the lower main body portion to accommodate the fire-extinguishing agent in the accommodation space.

9. The battery module as claimed in claim 7 or claim 8,
wherein a thickness between the upper surface of the upper main body portion and lower surface of the lower main body portion may be in a range of 0.3 mm to 5 mm, and
wherein a thickness of the upper main body portion and a thickness of the lower main body portion are each in a range of 0.1 mm to 1 mm.

10. The battery module as claimed in any one of claims 1 to 9, wherein the main body portion is made of steel, nickel, aluminium, magnesium, or copper.

11. The battery module as claimed in any one of claims 1 to 10, wherein the insulating film comprises one or more of polyethylene terephthalate (PET), polycarbonate (PC), and polypropylene (PP).

12. The battery module as claimed in any one of claims 1 to 10, wherein the insulating film is made of a plastic material having a melting point of 300 °C or less.
